(19) Europäisches Patentamt

European Patent Office

Office européen des brevets

(11) **EP 0 807 573 B1**

(12) **FASCICULE DE BREVET EUROPEEN**

(45) Date de publication et mention
de la délivrance du brevet:
**10.10.2001 Bulletin 2001/41**

(51) Int Cl.⁷: **B64C 9/10**

(21) Numéro de dépôt: **97400980.5**

(22) Date de dépôt: **30.04.1997**

(54) **Système pour la commande d'un volet compensateur de gouverne d'aéronef**

Ausgleichrudersteuerung für Flugzeuge

Aircraft tab control system

(84) Etats contractants désignés:
**DE ES GB NL SE**

(30) Priorité: **17.05.1996 FR 9606144**

(43) Date de publication de la demande:
**19.11.1997 Bulletin 1997/47**

(73) Titulaire: **AEROSPATIALE MATRA**
**75016 Paris (FR)**

(72) Inventeurs:
• **Durandeau, Michel**
**31200 Toulouse (FR)**

• **Foch, Etienne**
**31000 Toulouse (FR)**

(74) Mandataire: **Bonnetat, Christian**
**CABINET BONNETAT**
**29, rue de St. Pétersbourg**
**75008 Paris (FR)**

(56) Documents cités:
**FR-A- 1 015 687      GB-A- 1 025 707**
**US-A- 2 557 426      US-A- 2 577 439**

**Description**

La présente invention concerne un système pour la commande d'un volet compensateur d'efforts pour une gouverne d'aéronef.

On sait que, dans un avion à commande mécanique, sans servocommandes, il est usuel de prévoir un volet compensateur sur certaines surfaces aérodynamiques dudit avion, telles que par exemple la gouverne de direction, les gouvernes de profondeur, les ailerons, etc ... De tels volets compensateurs sont destinés à modifier les efforts de manoeuvre que le pilote devrait exercer sur les surfaces aérodynamiques pour les braquer en l'absence de volets compensateurs.

De nombreux ouvrages présentent les modes de fonctionnement de ces dispositifs à volets compensateurs (souvent appelés "Tab" suivant leur dénomination anglaise), ainsi que les équations qui régissent leur fonctionnement et permettent d'en calculer les caractéristiques en fonction de l'application au cas précis. Parmi les plus récents, on peut citer l'ouvrage de J. ROSKAM : "Airplane Flight Dynamics and Automatic Flight Controls" publié aux Etats-Unis par Roskam Aviation and Engineering Corporation, en 1979.

Dans les systèmes de compensation d'efforts de type automatique connus :

-   un volet compensateur est articulé en rotation du côté du bord de fuite de la surface aérodynamique associée, elle-même montée en rotation sur la structure dudit aéronef (aile, dérive, empennage, etc ...) ;
-   l'organe de pilotage (manche, volant, palonnier), à la disposition du pilote de l'aéronef, est relié mécaniquement à ladite surface aérodynamique de manière à commander le braquage de celle-ci par rapport à ladite structure ; et
-   une tringlerie mécanique relie le volet compensateur à la structure de façon que, à chaque valeur de l'angle de braquage de ladite surface aérodynamique par rapport à la structure, corresponde, selon une relation déterminée, une valeur de l'angle de braquage du volet compensateur par rapport à ladite surface aérodynamique.

Du fait même de leur réalisation essentiellement mécanique, de tels systèmes connus ne peuvent pas prendre en compte tous les paramètres qui seraient nécessaires pour une adaptation appropriée des efforts à toutes les conditions de vol. Par suite, leur action ne peut pas être optimale dans tout le domaine de vol et quel que soit le braquage de la surface aérodynamique, car elle résulte obligatoirement de compromis. Certaines conditions de vol telles que celles rencontrées lors du contre d'une panne de moteur ou lors de la rotation de l'avion au décollage conduisent à adopter des taux de compensation élevés pour satisfaire les réglementations en vigueur.

Par ailleurs, les contraintes structurales pendant le vol en croisière à vitesse élevée demanderaient une compensation plus faible, voire de signe opposé.

D'autre part, une compensation trop importante est la source d'anomalies aérodynamiques du type aspiration de gouverne par exemple.

Dans certains cas, des dispositifs de protection supplémentaires doivent être introduits.

L'objet principal de la présente invention est un système de commande de volet compensateur basé sur le principe des dispositifs à volets compensateurs du type à parallélogramme déformable, permettant de prendre en compte de nombreux paramètres qui, jusqu'à présent, ne pouvaient être intégrés dans lesdits systèmes.

A cette fin, selon l'invention, le système pour la commande d'un volet compensateur d'aéronef, du type décrit ci-dessus, est remarquable en ce qu'il comporte :

-   un premier capteur détectant la valeur de l'angle de braquage de ladite surface aérodynamique par rapport à ladite structure ;
-   un organe d'actionnement, mobile et commandable, relié à ladite structure et susceptible d'agir sur ladite tringlerie pour modifier ladite relation déterminée entre les valeurs des angles de braquage de ladite surface aérodynamique et dudit volet compensateur ;
-   un deuxième capteur détectant la position dudit organe d'actionnement ; et
-   un dispositif de commande recevant les informations desdits premier et deuxième capteurs et élaborant, à partir de ces informations, un ordre de commande pour ledit organe d'actionnement.

Ainsi, le braquage dudit volet compensateur peut être ajusté à toute valeur désirée en fonction du braquage de ladite surface aérodynamique.

Ledit dispositif de commande peut avantageusement recevoir, de plus, au moins un paramètre issu dudit aéronef et prendre en compte ledit paramètre dans l'élaboration dudit ordre de commande.

Ledit organe d'actionnement, mobile et commandable, peut être un vérin par exemple, cet organe pouvant être positionné, soit entre ladite structure et ladite tringlerie pour régler la position longitudinale d'un point d'ancrage de celle-ci, soit entre deux parties de ladite tringlerie pour régler la longueur de celle-ci.

On conçoit aisément que, dans les deux cas, l'action dudit organe d'actionnement modifie la relation entre l'angle de braquage du volet compensateur et l'angle de braquage de ladite surface aérodynamique.

Par ailleurs, lesdits paramètres utilisés dans le dispositif de commande peuvent être de nature différente, tels que par exemple une vitesse de l'aéronef, une information représentative de la position des dispositifs hypersustentateurs, un effort exercé par le pilote sur l'organe de pilotage, un facteur de charge, un angle d'assiette de l'aéronef, un angle d'attaque aérodynamique, une information représentative d'une configuration de systèmes de l'aéronef, l'ordre de recentrage d'effort (trim), etc ...

Le dispositif de commande dudit organe d'actionnement peut être de deux types différents :

- dans le premier, à partir des informations délivrées par ledit premier capteur, ledit dispositif de commande engendre une valeur de consigne pour la position dudit organe d'actionnement, cette valeur de consigne dépendant dudit paramètre, et ledit ordre de commande pour l'organe d'actionnement est le signal d'erreur entre ladite valeur de consigne et les informations délivrées par ledit deuxième capteur ;
- dans le second, à partir dudit paramètre, ledit dispositif de commande engendre une valeur de consigne pour la position de ladite surface aérodynamique et ledit ordre de commande pour l'organe d'actionnement est la somme algébrique des informations dudit deuxième capteur et du signal d'erreur entre ladite valeur de consigne et les informations délivrées par ledit premier capteur.

Dans un mode de réalisation avantageux du premier type, ledit organe d'actionnement a une position neutre pour laquelle ladite relation entre les angles de braquage du volet compensateur et de la surface aérodynamique présente une valeur de base déterminée uniquement par la géométrie de ladite tringlerie mécanique, ledit paramètre adressé au dispositif de commande est la vitesse air de l'aéronef, et, sous l'action dudit dispositif de commande, ledit organe d'actionnement prend une position opérationnelle qui dépend de ladite vitesse air et de l'angle de braquage de la surface aérodynamique et pour laquelle ladite relation prend une valeur opérationnelle différente de ladite valeur de base.

Un système, conforme à l'invention et se rapportant au deuxième type de dispositif de commande rappelé ci-dessus, comporte, avantageusement, un capteur des efforts exercés par le pilote sur ledit organe de pilotage, et ledit paramètre adressé au dispositif de commande est la mesure desdits efforts délivrée par ledit capteur, ledit organe d'actionnement prenant, sous l'action dudit dispositif de commande, une position opérationnelle pour laquelle le braquage dudit volet compensateur par rapport à ladite surface aérodynamique ajuste le braquage de cette dernière à la valeur correspondant à ladite mesure des efforts du pilote et fonction d'autres paramètres.

On obtient alors un système de pilotage de la surface aérodynamique par le contrôle de la position dudit volet compensateur. Dans un tel système, la liaison mécanique joignant l'organe de pilotage à la surface aérodynamique peut éventuellement être supprimée.

Par ailleurs, dans un système de ce type, il est possible de prévoir d'utiliser, pour élaborer l'ordre de commande dudit organe d'actionnement, soit ladite valeur de consigne pour la position de la surface aérodynamique, soit une autre information représentative d'un angle de braquage pour ladite surface aérodynamique.

Une telle autre information peut provenir, par exemple, du pilote automatique monté à bord de l'aéronef, ou bien encore être un signal de sécurité, lorsque ladite valeur de consigne atteint une valeur limite à ne pas dépasser.

Les figures du dessin annexé feront bien comprendre comment l'invention peut être réalisée. Sur ces figures, des références identiques désignent des éléments semblables.

La figure 1 est le schéma synoptique d'un exemple de réalisation du système de commande conforme à la présente invention.

La figure 2 illustre schématiquement une variante, au niveau de l'actionneur, du système de la figure 1, en ce qui concerne la liaison entre le volet compensateur et la structure de l'aéronef.

La figure 3 montre le schéma synoptique d'un exemple du dispositif de commande du vérin des systèmes des figures 1 et 2.

La figure 4 illustre graphiquement un exemple de relation entre les angles de braquage du volet compensateur et de la surface aérodynamique.

La figure 5 est le schéma synoptique d'une variante de réalisation des systèmes des figures 1 et 2, en ce qui concerne le dispositif de commande du vérin.

La figure 6 montre le schéma synoptique d'un exemple du dispositif de commande pour le système de la figure 5.

La figure 7 illustre graphiquement un exemple de fonctionnement réalisé par le dispositif de commande de la figure 6.

La figure 8 est le schéma synoptique d'une variante de réalisation du dispositif de commande de la figure 6.

La figure 9 montre le schéma synoptique d'une variante du système de la figure 5.

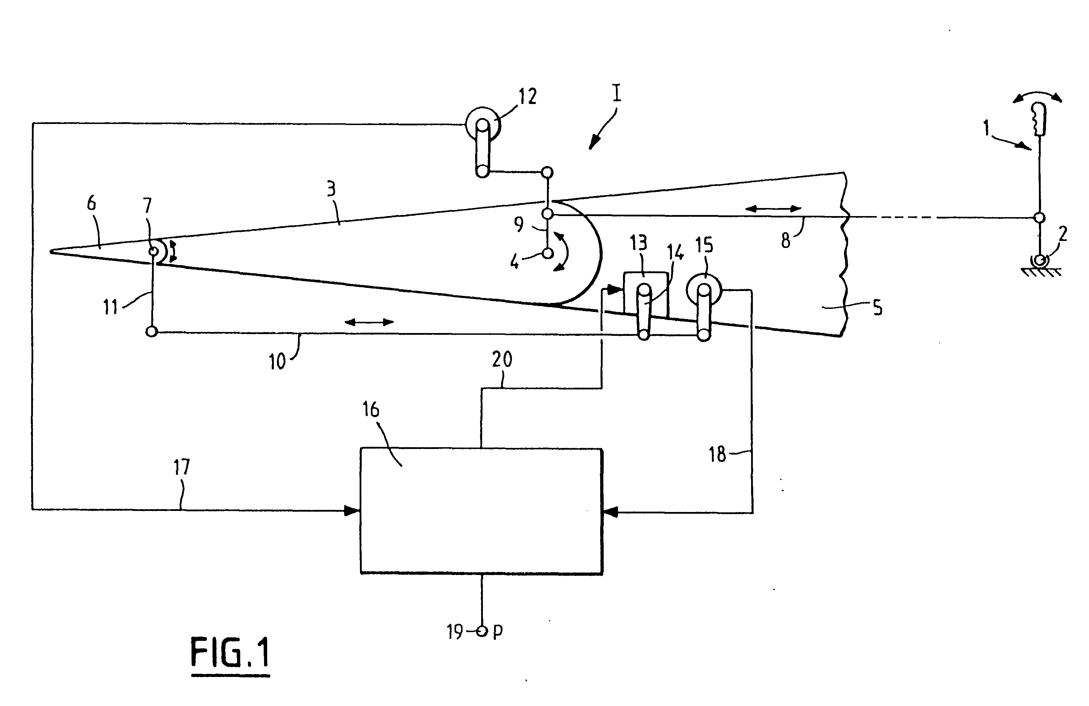

L'exemple de réalisation I du système de commande pour aéronef, montré par la figure 1, comporte, de façon connue :

- un organe de pilotage 1, à la disposition du pilote. Bien que sur la figure 1, l'organe de pilotage ait été schématisé sous la forme d'un manche articulé en 2 à la structure de l'aéronef, il est bien entendu que cet organe de pilotage pourrait être un palonnier, un volant, etc ... ;
- une surface aérodynamique commandable 3, par exemple une gouverne de direction, une gouverne de profondeur, un aileron, etc ..., montée en rotation, autour d'un arbre 4, sur une partie 5 de la structure de l'aéronef, par exemple une aile, une dérive, un empennage, etc ... ;
- un volet compensateur 6, fréquemment appelé "tab", articulé en rotation sur la surface aérodynamique 3, autour d'un arbre 7 disposé du côté du bord de fuite de cette dernière ;

- une première tringlerie 8 reliant ledit organe de pilotage 1 à un maneton 9 solidaire de l'arbre 4, de telle sorte que ladite surface aérodynamique 3 tourne avec l'arbre 4 lorsque le pilote actionne l'organe de pilotage 1 ; et

- une seconde tringlerie 10 reliant ladite partie de structure 5 à un maneton 11 solidaire de l'arbre 7, pour que ledit volet compensateur tourne avec l'arbre 7 par rapport à la surface aérodynamique 3, lorsque cette dernière tourne autour avec son arbre 4. Grâce à cette tringlerie 10, à chaque valeur de l'angle de braquage de la surface aérodynamique 3 par rapport à la partie de structure 5, autour de l'axe de l'arbre 4, correspond, selon une relation déterminée par les caractéristiques géométriques de la réalisation, une valeur de l'angle de braquage du volet compensateur 6 par rapport à la surface aérodynamique 3, autour de l'axe de l'arbre 7.

Conformément à la présente invention, le système de commande I de la figure 1 comporte de plus :

- un premier capteur 12, détectant la valeur de l'angle de braquage, autour de l'axe de l'arbre 4, de la surface aérodynamique 3, par rapport à la partie de structure 5 ;

- un organe d'actionnement 13, mobile et commandable, par exemple un vérin, monté sur la partie de structure 5 et susceptible d'agir sur la seconde tringlerie 10 pour modifier la relation déterminée entre les valeurs des angles de braquage dudit volet compensateur et de ladite surface aérodynamique. Sur la figure 1, la seconde tringlerie 10 est supposée être rigide et de longueur fixe et son extrémité, opposée au volet compensateur 6, est reliée à la partie de structure 5 par l'intermédiaire de l'organe mobile 14 de l'organe d'actionnement 13, de sorte que l'action de ce dernier entraîne la translation de ladite seconde tringlerie, sensiblement parallèlement à elle-même. Ainsi, la liaison entre la partie de structure 5 et le volet compensateur devient variable, de sorte que ladite relation déterminée entre les angles de braquage de la surface aérodynamique 3 et du volet compensateur 6 devient elle-même variable. Par ailleurs, sur la figure 1, on a représenté le vérin 13 comme étant du type rotatif. Il est bien évident qu'il pourrait, en variante, être linéaire. Quelle que soit sa forme de réalisation, le vérin 13 est irréversible sous l'action d'efforts extérieurs lorsqu'il n'est pas commandé. Dans un mode de réalisation particulier, le vérin 13 peut être du type comportant une position neutre qui est prise spontanément par ledit vérin en l'absence de commande, ladite position neutre étant, dans ces conditions, irréversible ;

- un deuxième capteur 15 détectant la position de l'organe mobile 14 de l'organe d'actionnement 13 ; et

- un dispositif de commande 16 recevant les informations provenant desdits premier et deuxième capteurs 12 et 15, respectivement par les liaisons 17 et 18, et pouvant comporter au moins une entrée 19 pour un paramètre issu de l'aéronef. En fonction desdites informations desdits capteurs 12 et 15 et dudit paramètre, le dispositif de commande 16 élabore un ordre de commande qu'il adresse à l'organe d'actionnement 13, par la liaison 20. Ainsi, ledit organe d'actionnement 13 fait varier la position longitudinale de la seconde tringlerie 10 et modifie donc la relation entre les angles de braquage du volet compensateur 6 et de la surface aérodynamique 3.

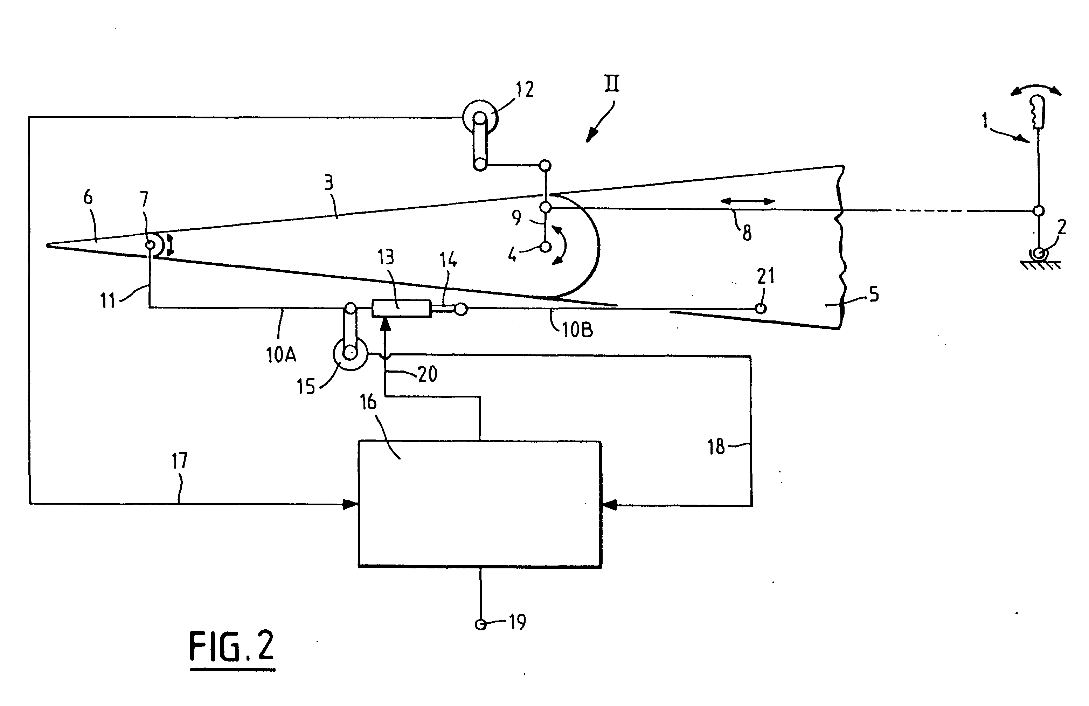

La variante de réalisation II du système de commande conforme à l'invention, montrée par la figure 2, est très proche de l'exemple de réalisation I de la figure 1. Toutefois, dans ce cas, la seconde tringlerie 10 est constituée de deux parties 10A et 10B, qui sont reliées l'une à l'autre par le vérin 13 (qui est dans ce cas avantageusement linéaire), et dont les extrémités opposées audit vérin 13 sont respectivement reliées à la partie de structure 5 (en 21) et au maneton 11. Ainsi, dans ce cas, la variation de la relation entre les angles de braquage du volet compensateur 6 et de la surface aérodynamique 3 est obtenue par variation de la longueur de la seconde tringlerie 10, et non plus par translation de celle-ci, comme décrit en regard de la figure 1.

De ce qui vient d'être décrit en regard des figures 1 et 2, on comprendra aisément que, lorsque l'organe d'actionnement 13 est inactif et dans sa position neutre, la relation entre l'angle de braquage du volet compensateur 6 autour de l'arbre 7 et de l'angle de braquage de la surface aérodynamique 3 autour de l'arbre 4 présente une valeur de base uniquement déterminée par la géométrie du système et la longueur de la seconde tringlerie 10.

En revanche, lorsque le dispositif de commande 16 rend actif l'organe d'actionnement 13 (par la liaison 20) et lui fait prendre une position opérationnelle différente de la position neutre, ledit organe d'actionnement 13 déplace la tringlerie 10 en translation (figure 1) ou modifie la longueur de ladite tringlerie (figure 2). Il en résulte que ladite relation entre les angles de braquage du volet compensateur 6 et de la surface aérodynamique 3 prend une valeur opérationnelle différente de ladite valeur de base.

Ainsi, puisque l'ordre de commande adressé à l'organe d'actionnement 13 par le dispositif de commande 16 est élaboré en fonction des informations des capteurs de position 12 et 15 et des paramètres adressés sur les entrées 19, on voit que le dispositif de commande 16 peut établir des lois de braquage du volet compensateur 6 en fonction du braquage de la surface aérodynamique 3 et positionner ledit volet de façon à lui conférer un braquage qui soit fonction des conditions de vol.

De telles lois de braquage du volet compensateur 6 peuvent aisément être établies par le calcul en connaissant la géométrie du dispositif et avec les équations de la mécanique de vol, puis être enfin mises au point par des essais en vol et/ou en soufflerie. De plus, lors des essais, on peut explorer, sans modification mécanique et éventuellement au cours du même vol, toute la gamme des valeurs, en particulier des taux d'automaticité, de ladite relation afin d'en déterminer les valeurs optimales, soit pour la réalisation d'un système conventionnel, soit pour enregistrer ces valeurs dans le dispositif 16.

Si l'organe d'actionnement 13 est l'objet d'une panne, l'aéronef reste pilotable avec toutefois une relation fixe entre les angles de braquage du volet 6 et de la surface aérodynamique 3.

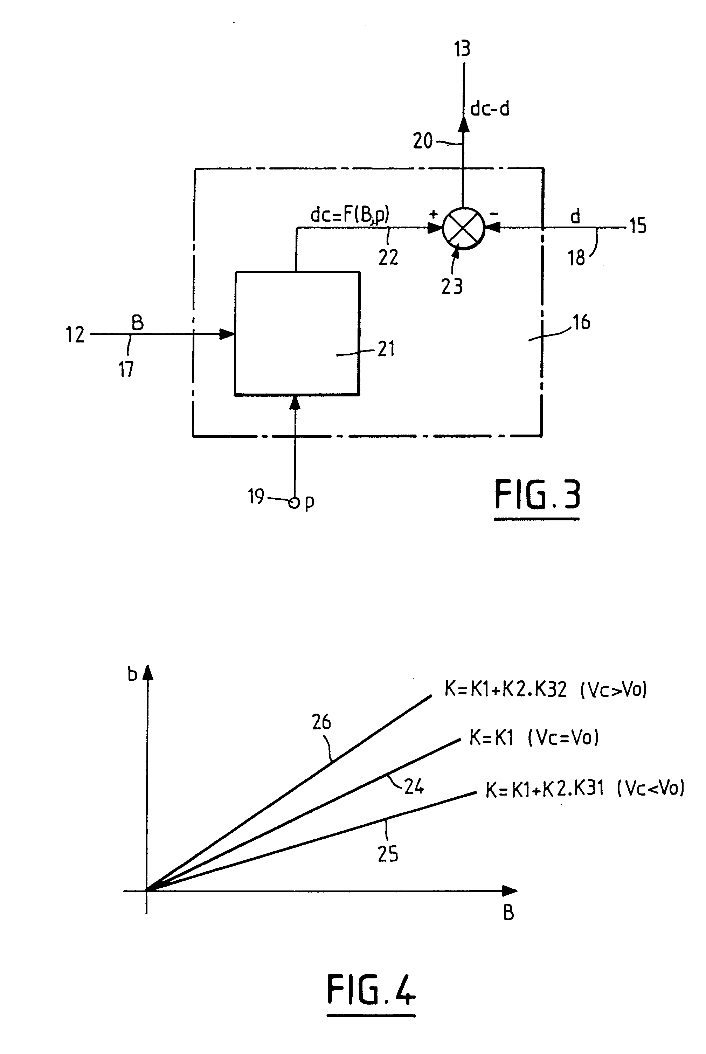

Sur la figure 3, on a représenté un exemple de réalisation du dispositif de commande 16 pour les systèmes I et II des figures 1 et 2. Cet exemple de réalisation comporte :

- une table 21 qui, d'une part, reçoit, par une entrée 19, un paramètre p et, par la liaison 17, la mesure de l'angle de braquage B de la surface aérodynamique 3 autour de l'axe 4 et qui, d'autre part, adresse sur sa sortie 22 une valeur de consigne dc pour l'organe d'actionnement 13. Cette table 21 fait correspondre, à chaque valeur de l'angle de braquage B, une valeur de consigne dc qui est une fonction F(B,p) de l'angle de braquage B et du paramètre p ; et
- un soustracteur 23 qui reçoit, d'un côté, ladite valeur de consigne dc et, de l'autre, la position réelle d de l'organe mobile 14 mesurée par le capteur 15 et adressée audit soustracteur 23 par la liaison 18, et qui adresse à l'organe d'actionnement 13, par l'intermédiaire de la liaison 20, le signal d'erreur dc-d.

On voit qu'ainsi le dispositif 16 de la figure 3 asservit la position de l'organe mobile 14 de l'organe d'actionnement 13 à la position de consigne dc.

Si on appelle :

- K1 la valeur de base de la relation entre les angles de braquage b et B, respectivement du volet 6 et de la surface aérodynamique 3, lorsque l'organe d'actionnement 13 est inactif et en position neutre ;
- K2 le rapport de débattement du volet compensateur 6 par rapport au déplacement de l'organe mobile 14 de l'organe 13,

l'angle de braquage b du volet compensateur est égal à b = K1.B + K2.d.

Puisque, par ailleurs, la position d de l'organe mobile 14 est asservie à la position de consigne dc=F(B,p), l'angle de braquage b prend la valeur K1.B+K2.F(B,p).

Le paramètre p peut être de différente nature. Dans un exemple particulier d'application où le paramètre p est la vitesse air Vc (dont la valeur est disponible à bord de l'aéronef), la valeur de consigne dc peut être du type dc=K3.B, expression dans laquelle K3 est variable en fonction du paramètre Vc. L'angle de braquage b du volet compensateur 6 prend alors la valeur (à une constante près)

$$b = B.(K1+K2.K3) = B.K$$

en posant K = K1+K2.K3.

Sur la figure 4, on a illustré un exemple volontairement simplifié de relation entre les angles de braquage b et B, en supposant que K3 ne pouvait prendre que les trois valeurs fixes 0, K31 et K32 en fonction de la position de la vitesse air Vc par rapport à un seuil de vitesse Vo :

- si Vc=Vo, K3 est égal à 0 et K prend la valeur K1, de sorte qu'à tout angle de braquage B de la surface aérodynamique 3 correspond un angle de braquage b=K1.B. Dans ce cas, l'organe mobile 14 est dans sa position neutre et la relation entre les angles de braquage b et B (voir la courbe 24) a sa valeur de base uniquement déterminée par la géométrie de la tringlerie 10 ;
- si Vc<Vo, K3 prend la valeur fixe K31 et K est égal à K1+K2.K31, de sorte que l'organe mobile 14 prend une position opérationnelle telle qu'à tout angle de braquage B de la surface aérodynamique 3 correspond un angle de braquage b=(K1+K2.K31). B pour le volet compensateur 6. La relation entre les angles de braquage b et B prend alors une valeur opérationnelle se trouvant sur la courbe 25 ;
- si Vc>Vo, K3 prend la valeur fixe K32 et K est égal à K1+K2.K32, de sorte que l'organe mobile 14 prend une position opérationnelle telle qu'à tout angle de braquage B de la surface aérodynamique 3 correspond un angle de braquage b=(K1+K2.K32). B pour le volet compensateur 6. La relation entre les angles de braquage b et B prend alors une valeur opérationnelle se trouvant sur la courbe 26.

Sur la figure 4, on a supposé que, à basse vitesse, les valeurs opérationnelles de la relation entre les angles de braquage b et B étaient inférieures à la valeur de base, tandis que, aux vitesses élevées, lesdites valeurs opérationnelles étaient supérieures à cette valeur de base. En fonction des aéronefs, cela pourrait être le contraire, les valeurs opérationnelles correspondant à des vitesses élevées étant alors inférieures à la valeur de base et celles qui correspondent aux basses vitesses étant supérieures à cette dernière.

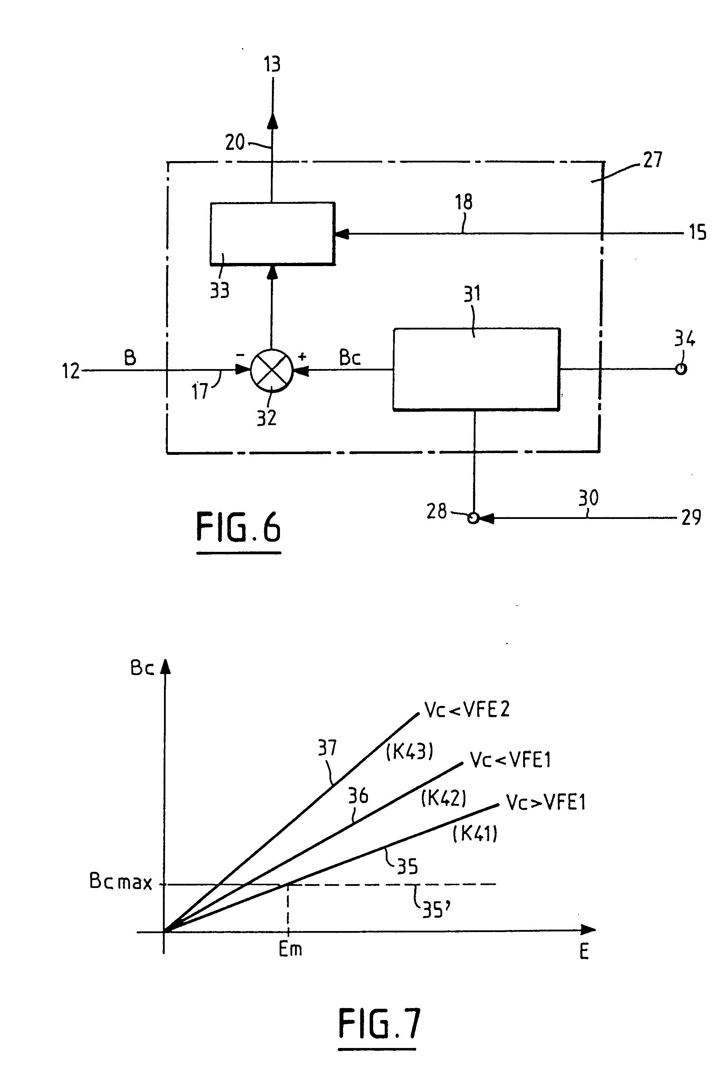

De plus, comme paramètre p, on pourrait, à la place ou en plus de la vitesse air Vc, utiliser, par exemple, la position de dispositifs hypersustentateurs, de façon semblable à ce qui est décrit ci-après en regard des figures 6 et 7. Dans ce cas, la valeur opérationnelle de la relation entre les angles de braquage du volet compensateur 6 et de la surface aérodynamique 3 peut être soit plus grande, soit plus petite, lorsque lesdits dispositifs hypersustentateurs sont sortis que lorsqu'ils sont rentrés, en fonction du type d'aéronef.

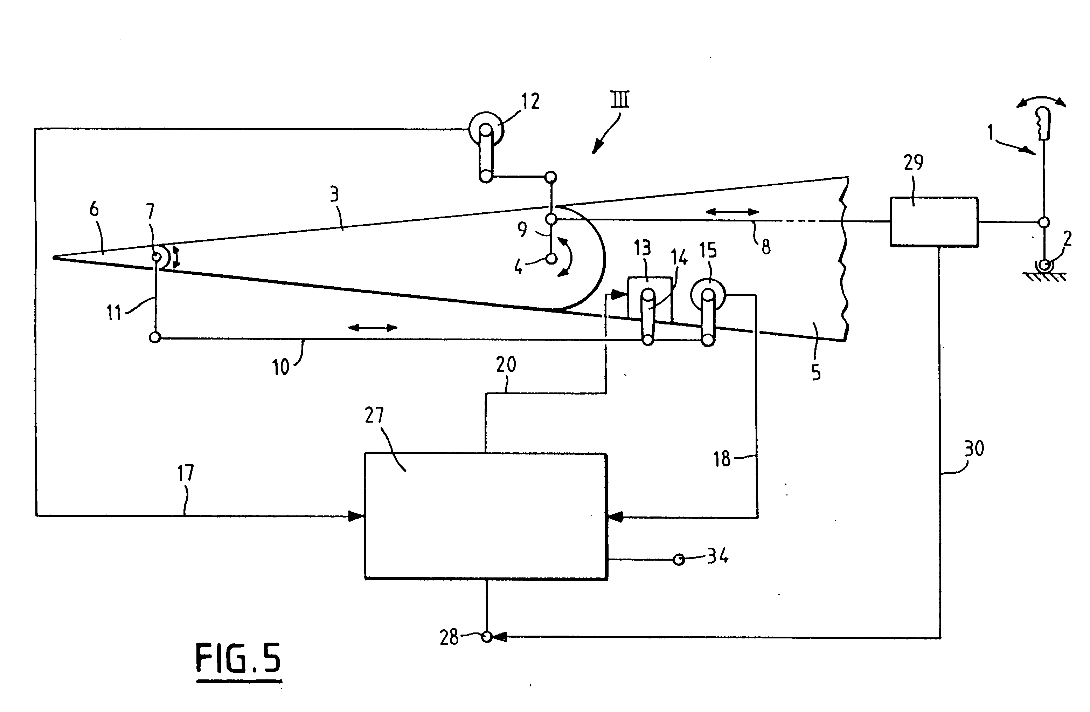

Dans la variante de réalisation III du système conforme à la présente invention, illustrée par les figures 5 et 6, on retrouve les éléments 1 à 15, 17, 18 et 20 décrits ci-dessus en regard des figures 1 et 2. Cependant, dans ce mode de réalisation III :

-    le dispositif de commande 16 des modes de réalisation I et II a été remplacé par un dispositif de commande 27, pourvu d'entrées 28 et 34. Le dispositif de commande 27, comme le dispositif de commande 16, est relié aux capteurs 12 et 15 et à l'organe d'actionnement 13, respectivement par les liaisons 17, 18 et 20 ; et

-    il est prévu, sur la première tringlerie 8, entre l'organe de pilotage 1 et la surface aérodynamique 3, un capteur d'efforts 29 mesurant les efforts exercés directement sur ladite surface aérodynamique 3 par le pilote et adressant ces efforts mesurés sur l'entrée 28 du dispositif de commande 27, par l'intermédiaire d'une liaison 30.

Comme le montre la figure 6, le dispositif de commande 27 comporte :

-    une table 31 qui est reliée aux entrées 28 et 34 et qui, à chaque valeur d'efforts mesurée par le capteur 29, fait correspondre une valeur de consigne Bc pour le braquage de la surface aérodynamique 3. Sur son entrée 34, la table 31 reçoit la vitesse air Vc, disponible à bord de l'aéronef ;

-    un soustracteur 32 qui reçoit, d'une part, ladite valeur de consigne Bc provenant de la table 31 et, d'autre part, la valeur réelle de l'angle de braquage B provenant du capteur 12, par la liaison 17, et qui engendre un signal d'erreur ; et

-    un dispositif d'asservissement 33 qui reçoit, d'une part, ledit signal d'erreur provenant du soustracteur 32 et, d'autre part, la valeur du déplacement $\underline{d}$ de l'organe d'actionnement 13 provenant du capteur 15, par la liaison 18 et qui adresse, à l'organe d'actionnement 13 par la liaison 20, un ordre de commande qui correspond à la somme algébrique de ladite valeur de l'angle de braquage $\underline{b}$ et dudit signal d'erreur.

Ainsi, le système III des figures 5 et 6 permet de réaliser un dispositif dans lequel le braquage de la surface aérodynamique 3 est une fonction, par exemple directement proportionnelle, des efforts du pilote. Le signal d'erreur engendré par le soustracteur 32 est utilisé pour ajouter ou retrancher (dans le dispositif d'asservissement 33) à l'angle de braquage B dû à la géométrie de la seconde tringlerie 10, la valeur nécessaire pour satisfaire à la fonction recherchée. Le volet compensateur 6 est alors utilisé aussi bien pour diminuer que pour augmenter des efforts aérodynamiques, afin d'asservir la position de la gouverne aux efforts sur l'organe de pilotage selon la loi désirée.

On voit ainsi que le système III permet :

-    de modifier, avec optimisation, les efforts de commande du pilote, en fonction des conditions de vol ;

-    de corriger les anomalies de moment de charnière, c'est-à-dire en particulier les non-linéarités indésirables ;

-    d'asservir la surface aérodynamique 3 à la position commandée. En effet, à effort nul, tout mouvement tendant à écarter la surface aérodynamique 3 de sa position de consigne, entraîne une action de volet compensateur 6 pour l'y ramener. Ceci permet en particulier de contrer automatiquement des anomalies aérodynamiques, telles que l'aspiration de gouverne ; et

-    de conserver une commande mécanique de la gouverne, en cas de perte de l'aide au pilotage, et ceci sans obligation de dispositif d'embrayage ou de débrayage et sans efforts parasites introduits par ces systèmes.

Dans le système III des figures 5 et 6, comme il a été dit ci-dessus, l'organe mobile 14 de l'organe d'actionnement 13 est positionné en fonction de l'écart entre la position de consigne Bc, qui est une fonction des efforts exercés par le pilote sur l'organe de pilotage 1, et la position B de la gouverne, détectée par le capteur 12. Cet écart est exploité par le dispositif de commande 27 pour commander l'organe 13 dans un sens déterminé par le signe dudit écart, jusqu'à annulation du signal d'erreur Bc-B.

Sur la figure 7, on a illustré un exemple d'élaboration, par la table 31, de la consigne de braquage Bc. Dans cet exemple, volontairement simplifié, on a supposé que la valeur de consigne Bc était proportionnelle à l'effort E mesuré par le capteur 29, c'est-à-dire du type Bc=K4.E, K4 étant lui-même un coefficient variable en fonction de conditions de vol. Dans l'exemple de la figure 7, on a supposé que l'aéronef était équipé de dispositifs hypersustentateurs pouvant prendre trois positions, à chacune desquelles correspond une vitesse limite à ne pas dépasser VFE. On peut voir sur cette figure que :

-    si la vitesse air Vc est supérieure à une première valeur VFE1 de VFE correspondant à la position de sortie maximale des dispositifs hypersustentateurs, le coefficient K4 prend une valeur K41, la consigne Bc étant représentée, en fonction de l'effort E, par la courbe 35. On remarquera que la consigne Bc peut être éventuellement limitée à une valeur maximale Bcmax (courbe 35') au-delà d'une valeur Em de l'effort E, à la vitesse limite de VFE1 ;

- si la vitesse air Vc est inférieure à ladite première valeur VFE1 de VFE, les dispositifs hypersustentateurs étant en position de sortie intermédiaire, le coefficient K4 prend la valeur K42, la consigne Bc étant représentée, en fonction de l'effort E, par la courbe 36 ;
- si la vitesse air Vc est inférieure à une deuxième valeur VFE2 de VFE, inférieure à la valeur VFE1 et correspondant à la position rentrée desdits dispositifs hypersustentateurs, le coefficient K4 prend la valeur K43, la consigne Bc étant représentée, en fonction de l'effort E, par la courbe 37.

L'organe mobile 14 de l'organe d'actionnement 13 peut être commandé par l'asservissement 33 à une vitesse proportionnelle à l'écart Bc-B jusqu'à l'annuler, avec une éventuelle limitation de la vitesse maximale. En variante, l'asservissement 33 peut comporter un intégrateur dont l'entrée reçoit ledit écart et dont la sortie représente l'ordre de position de l'organe mobile 14. Là également, on peut prévoir une limitation de la vitesse maximale de déplacement de l'organe mobile 14. Il s'agit là d'un problème classique d'asservissement où l'erreur doit être minimisée et la stabilité garantie dans le domaine de fonctionnement du système.

On voit ainsi que, dans le système III de la figure 5, lorsque le pilote agit sur l'organe de pilotage 1, la surface aérodynamique 3 pivote autour de l'axe de l'arbre 4 sous l'action de la première tringlerie 8 et l'angle de braquage de ladite surface aérodynamique est ajusté par asservissement à la valeur Bc grâce au braquage du volet compensateur 6.

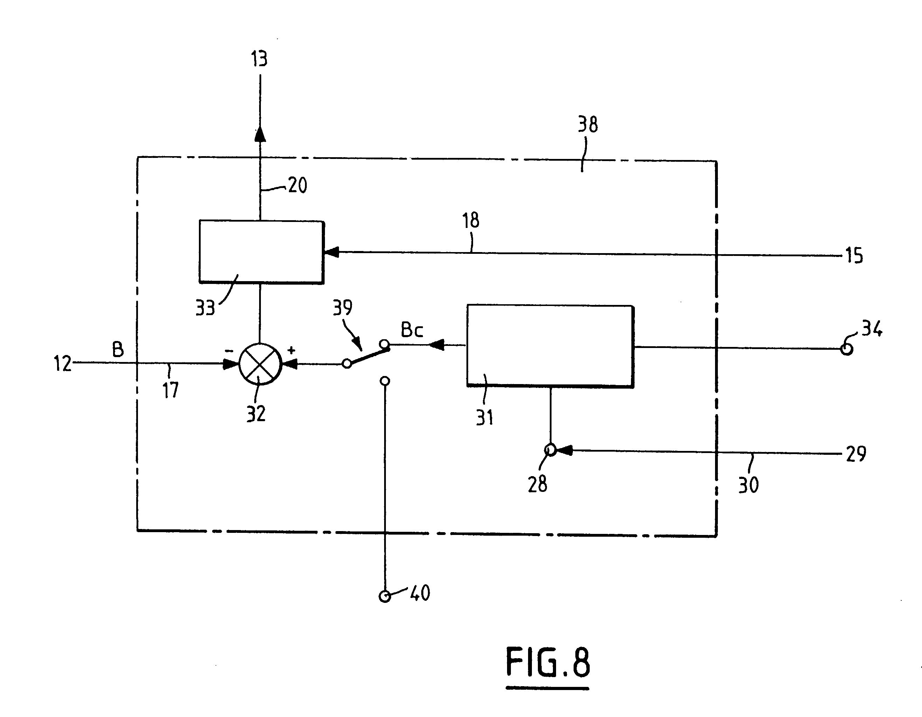

Sur la figure 8, on a représenté une variante de réalisation 38 du dispositif de commande 27. On y retrouve les différents éléments 17, 18, 20, 28 et 30 à 34. Le dispositif de commande 38 comporte de plus un commutateur 39, interposé entre la table 31 et le soustracteur 32 et pouvant relier audit soustracteur 32, soit la sortie de la table 31, soit une borne 40.

Sur la borne 40, on peut appliquer le signal de braquage de la surface aérodynamique issu d'un pilote automatique (non représenté) monté à bord de l'aéronef. Ainsi, quand le commutateur 39 occupe la position appropriée, le système conforme à la présente invention fait office de servomoteur pour le pilote automatique.

En variante, dans le cas où la surface aérodynamique 3 est une gouverne de profondeur, sur la borne 40 peut être appliqué un signal à piquer, le commutateur 39 passant automatiquement de sa position pour laquelle il relie la table 31 au soustracteur 32 à sa position pour laquelle il relie ce dernier à la borne 37, lorsque l'incidence de l'aéronef dépasse un seuil donné. On obtient ainsi une protection en incidence. Dans ce cas, le commutateur 39 peut être actionné par le signal issu d'un capteur d'incidence.

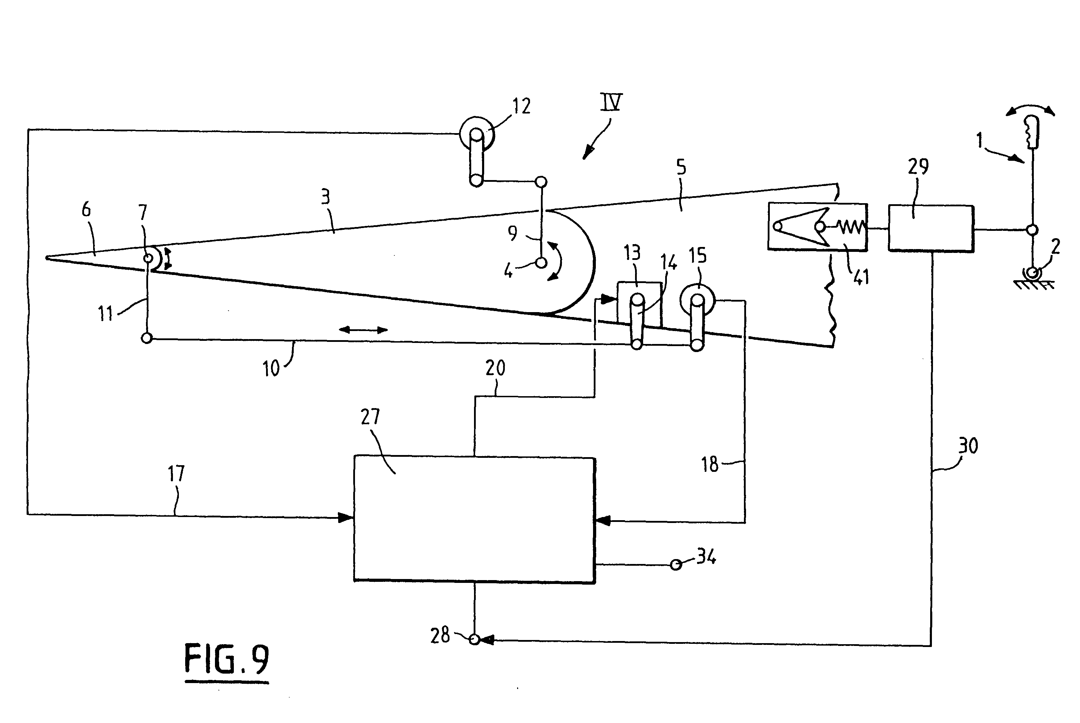

Comme le montre la figure 9, la tringlerie 8 peut même être supprimée. Dans le mode de réalisation IV de cette figure 9, la tringlerie 8 a été éliminée et remplacée par un dispositif de sensation artificielle 41, susceptible, uniquement en ce qui concerne les efforts à exercer par le pilote, d'exercer la même fonction.

On peut dans ce cas remplacer le capteur d'effort par un capteur de position qui donnera directement l'ordre de pilotage à transmettre à l'entrée 28.

**Revendications**

1. Système pour la commande d'un volet compensateur (6) d'aéronef, ledit volet compensateur (6) étant articulé en rotation du côté du bord de fuite d'une surface aérodynamique (3), elle-même montée en rotation sur la structure (5) dudit aéronef, le système comprenant:

   - un organe de pilotage (1), à la disposition du pilote dudit aéronef, relié mécaniquement à ladite surface aérodynamique (3) de manière à commander le braquage de celle-ci par rapport à ladite structure (5) ; et
   - une tringlerie mécanique (10) reliant ledit volet compensateur (6) à ladite structure (5) de façon que, à chaque valeur de l'angle de braquage de ladite surface aérodynamique par rapport à ladite structure, corresponde, selon une relation déterminée, une valeur de l'angle de braquage dudit volet compensateur par rapport à ladite surface aérodynamique,

   **caractérisé en ce qu'**il comporte :

   - un premier capteur (12) détectant la valeur de l'angle de braquage de ladite surface aérodynamique (3) par rapport à ladite structure (5) ;
   - un organe d'actionnement (13), mobile et commandable, relié à ladite structure (5) et susceptible d'agir sur ladite tringlerie (10) pour modifier ladite relation déterminée entre les valeurs des angles de braquage de ladite surface aérodynamique et dudit volet compensateur ;
   - un deuxième capteur (15) détectant la position dudit organe d'actionnement (13) ; et
   - un dispositif de commande (16, 27) recevant les informations desdits premier et deuxième capteurs et élaborant, à partir de ces informations, un ordre de commande pour ledit organe d'actionnement (13).

2. Système selon la revendication 1, **caractérisé en ce que** ledit dispositif de commande (16, 27) reçoit de plus au moins un paramètre (p) issu dudit aéronef et prend en compte ledit paramètre pour l'élaboration dudit ordre de commande.

3. Système selon l'une des revendications 1 ou 2,

**caractérisé en ce que** ledit organe d'actionnement (13) est un vérin intercalé entre deux parties (10A, 10B) de ladite tringlerie mécanique (10) pour conférer à celle-ci une longueur variable.

4. Système selon l'une des revendications 1 ou 2, **caractérisé en ce que** ledit organe d'actionnement est un vérin (13) intercalé entre ladite structure (5) et ladite tringlerie (10) pour régler la position longitudinale de celle-ci.

5. Système selon l'une quelconque des revendications 2 à 4, **caractérisé en ce que**, à partir des informations délivrées par ledit premier capteur (12), le dispositif de commande (16) engendre une valeur de consigne (dc) pour la position (d) dudit organe d'actionnement (13), cette valeur de consigne dépendant dudit paramètre (p), et **en ce que** ledit ordre de commande pour l'organe d'actionnement (13) est le signal d'erreur entre ladite valeur de consigne (dc) et les informations (d) délivrées par ledit deuxième capteur (15).

6. Système selon la revendication 5, **caractérisé en ce que** ladite valeur de consigne (dc) pour la position dudit organe d'actionnement (13) dépend de la vitesse air de l'aéronef.

7. Système selon la revendication 6, **caractérisé en ce que** ledit organe d'actionnement (13) a une position neutre pour laquelle ladite relation entre les angles de braquage du volet compensateur et de la surface aérodynamique présente une valeur de base déterminée uniquement par la géométrie de ladite tringlerie mécanique (10), **en ce que** ledit paramètre (p) adressé au dispositif de commande (16) est la vitesse air de l'aéronef, et **en ce que**, sous l'action dudit dispositif de commande (16), ledit organe d'actionnement (13) prend une position opérationnelle qui dépend de ladite vitesse air et de l'angle de braquage de la surface aérodynamique et pour laquelle ladite relation prend une valeur opérationnelle différente de ladite valeur de base.

8. Système selon la revendication 7, **caractérisé en ce que**, à basse vitesse air, ladite valeur opérationnelle est plus grande que ladite valeur de base, et **en ce que**, à vitesse air élevée, ladite valeur opérationnelle est plus petite que ladite valeur de base.

9. Système selon la revendication 7, **caractérisé en ce que**, à basse vitesse air, ladite valeur opérationnelle est plus petite que ladite valeur de base, et **en ce que**, à vitesse air élevée, ladite valeur opérationnelle est plus grande que ladite valeur de base.

10. Système selon l'une quelconque des revendications 2 à 4, pour un aéronef comportant des dispositifs hypersustentateurs, **caractérisé en ce que** ledit paramètre (p) adressé au dispositif de commande est une information représentative de la position desdits dispositifs hypersustentateurs et **en ce que**, sous l'action dudit dispositif de commande, ledit organe d'actionnement (13) prend une position opérationnelle qui dépend de la position desdits dispositifs hypersustentateurs.

11. Système selon la revendication 10, **caractérisé en ce que** la valeur de la relation entre les angles de braquage dudit volet compensateur (6) et de ladite surface aérodynamique (3) est plus grande lorsque lesdits dispositifs hypersustentateurs sont sortis que lorsqu'ils sont rentrés.

12. Système selon la revendication 10, **caractérisé en ce que** la valeur de la relation entre les angles de braquage dudit volet compensateur (6) et de ladite surface aérodynamique (3) est plus petite lorsque lesdits dispositifs hypersustentateurs sont sortis que lorsqu'ils sont rentrés.

13. Système selon l'une des revendications 2 à 4, **caractérisé en ce que**, à partir dudit paramètre, ledit dispositif de commande (27) engendre une valeur de consigne (Bc) pour la position de ladite surface aérodynamique (3) et **en ce que** ledit ordre de commande pour l'organe d'actionnement (13) est la somme algébrique des informations dudit deuxième capteur (15) et du signal d'erreur entre ladite valeur de consigne (Bc) et les informations délivrées par ledit premier capteur (12).

14. Système selon la revendication 13, **caractérisé en ce que** ledit paramètre est constitué par les efforts (E) du pilote sur l'organe de pilotage (1).

15. Système selon l'une des revendications 13 ou 14, **caractérisé en ce que** ladite valeur de consigne (Bc) est fonction de la vitesse air de l'aéronef.

16. Système selon l'une quelconque des revendications 13 à 15, **caractérisé en ce qu'**il comporte un capteur (29) des efforts (E) exercés par le pilote sur ledit organe de pilotage (1), **en ce que** ledit paramètre adressé au dispositif de commande est la mesure desdits efforts (E) délivrée par ledit capteur et **en ce que**, sous l'action dudit dispositif de commande (27), ledit organe d'actionnement (13) prend une position opérationnelle pour laquelle le braquage dudit volet compensateur (6) par rapport à ladite surface aérodynamique (3) ajuste le braquage de cette dernière à la valeur correspondant à ladite mesure des efforts du pilote.

17. Système selon la revendication 16,
**caractérisé en ce que** l'ajustement du braquage de ladite surface aérodynamique (3) est tel que l'angle de braquage de celle-ci est proportionnel aux efforts (E) mesurés du pilote.

18. Système selon la revendication 16,
**caractérisé en ce que** l'ajustement du braquage de ladite surface aérodynamique (3) est tel que le rapport de l'angle de braquage de ladite surface aérodynamique aux efforts mesurés du pilote est fonction de la vitesse air dudit aéronef.

19. Système selon la revendication 18,
**caractérisé en ce que** l'ajustement du braquage de ladite surface aérodynamique est tel que le rapport de l'angle de braquage de ladite surface aérodynamique aux efforts mesurés du pilote diminue quand la vitesse air augmente.

20. Système selon la revendication 16, pour un aéronef comportant des dispositifs hypersustentateurs,
**caractérisé en ce que** l'ajustement du braquage de ladite surface aérodynamique est tel que le rapport de braquage de ladite surface aérodynamique aux efforts mesurés du pilote dépend de la position desdits dispositifs hypersustentateurs.

21. Système selon la revendication 20,
**caractérisé en ce que** l'ajustement du braquage de ladite surface aérodynamique est tel que le rapport de l'angle de braquage de ladite surface aérodynamique aux efforts mesurés du pilote est plus grand quand les dispositifs hypersustentateurs sont sortis que lorsqu'ils sont rentrés.

22. Système selon la revendication 13, comportant un soustracteur (32) recevant, pour engendrer ledit signal d'erreur, sur une entrée, lesdites informations délivrées par ledit premier capteur (12) et, sur son autre entrée, ladite valeur de consigne (Bc) pour la position de ladite surface aérodynamique (3),
**caractérisé en ce qu'**il comporte un commutateur (39) relié à ladite autre entrée pour adresser audit soustracteur (32), soit ladite valeur de consigne (Bc), soit une autre information représentative d'un angle de braquage pour ladite surface aérodynamique.

23. Système selon la revendication 22, pour un aéronef comportant un pilote automatique,
**caractérisé en ce que** ladite autre information est la commande de l'angle de braquage de la surface aérodynamique (3) issue dudit pilote automatique.

24. Système selon la revendication 22, dans lequel ladite surface aérodynamique est une gouverne de profondeur,
**caractérisé en ce que** ladite autre information correspond à un signal à piquer lorsque l'incidence de ladite gouverne atteint une limite de sécurité à ne pas dépasser et **en ce que** ledit comparateur (39) est commandé automatiquement pour adresser audit soustracteur (32) ladite autre information, lorsque ladite valeur de consigne (Bc) dépasse ladite limite de sécurité.

25. Système pour la commande d'un volet compensateur (6) d'aéronef, système dans lequel :

- ledit volet compensateur (6) est articulé en rotation du côté du bord de fuite d'une surface aérodynamique (3), elle-même montée en rotation sur la structure (5) dudit aéronef ;
- un organe de pilotage (1), à la disposition du pilote dudit aéronef, pour commander le braquage de ladite surface aérodynamique (3) par rapport à ladite structure (5) ; et
- une tringlerie mécanique (10) relie ledit volet compensateur (6) à ladite structure (5) de façon que, à chaque valeur de l'angle de braquage de ladite surface aérodynamique par rapport à ladite structure, corresponde, selon une relation déterminée, une valeur de l'angle de braquage dudit volet compensateur par rapport à ladite surface aérodynamique,

  caractérisé :

- en ce qu'il n'existe aucune liaison mécanique entre ledit organe de pilotage (1) et ladite surface aérodynamique (3) ; et
- en ce qu'il comporte :

  . un premier capteur (12) détectant la valeur de l'angle de braquage de ladite surface aérodynamique (3) par rapport à ladite structure (5) ;
  . un organe d'actionnement (13), mobile et commandable, relié à ladite structure (5) et susceptible d'agir sur ladite tringlerie (10) pour modifier ladite relation déterminée entre les valeurs des angles de braquage de ladite surface aérodynamique et dudit volet compensateur ;
  . un deuxième capteur (15) détectant la position dudit organe d'actionnement (13) ;
  . un troisième capteur (29) relié audit organe de pilotage (1) ; et
  . un dispositif de commande (27) recevant les informations desdits premier, deuxième et troisième capteurs et élaborant, à partir de ces informations, un ordre de commande pour ledit organe d'actionnement (13) tel que celui-ci prend une position opérationnelle pour laquelle le braquage dudit volet compensateur (6) par rapport à ladite surface aérodynamique (3) ajuste le braquage de cette dernière à la valeur correspondant à ladite mesure délivrée par ledit troisième capteur (29).

**Patentansprüche**

1. System für die Steuerung einer Ausgleichsklappe (6) eines Flugzeugs, in dem die genannte Ausgleichsklappe (6) an der Hinterkante einer aerodynamischen Fläche (3) drehbar angelenkt ist, wobei diese Fläche selbst drehbar auf die Struktur (5) des genannten Flugzeugs montiert ist, ein System, das umfasst:

   - ein Steuerorgan (1), das dem Piloten des genannten Flugzeugs zur Verfügung steht und das mechanisch mit der genannten aerodynamischen Fläche (3) so in Verbindung steht, dass der Ausschlag dieser Fläche gegenüber der genannten Struktur (5) gesteuert werden kann; und
   - ein mechanisches Gestänge (10), das die genannte Ausgleichsklappe (6) mit der genannten Struktur (5) so verbindet, dass jedem Wert des Ausschlagwinkels der genannten aerodynamischen Fläche gegenüber der genannten Struktur nach einer bestimmten Beziehung ein Wert des Ausschlagwinkels der genannten Ausgleichsklappe gegenüber der genannten aerodynamischen Fläche entspricht,

   **dadurch gekennzeichnet, dass** es umfasst:

   - einen ersten Sensor (12), der den Wert des Ausschlagwinkels der genannten aerodynamischen Fläche (3) gegenüber der genannten Struktur (5) erfasst;
   - ein bewegliches und steuerbares Betätigungsorgan (13), das mit der genannten Struktur (5) in Verbindung steht und in der Lage ist, auf das genannte Gestänge (10) einzuwirken, um die genannte Beziehung zwischen den Werten der Ausschlagwinkel der genannten aerodynamischen Fläche und der genannten Ausgleichsklappe zu verändern;
   - einen zweiten Sensor (15), der die Position des genannten Betätigungsorgans (13) erfasst; und
   - eine Steuervorrichtung (16, 27), die die Informationen des genannten ersten und des genannten zweiten Sensors empfängt und anhand dieser Informationen einen Steuerbefehl für das genannte Betätigungsorgan (13) erzeugt.

2. System entsprechend Anspruch 1, **dadurch gekennzeichnet, dass** die genannte Steuervorrichtung (16, 27) außerdem mindestens einen vom genannten Flugzeug stammenden Parameter (p) empfängt und den genannten Parameter bei der Erzeugung des genannten Steuerbefehls berücksichtigt.

3. System entsprechend einem der Ansprüche 1 oder 2, **dadurch gekennzeichnet, dass** das genannte Betätigungsorgan (13) ein Stellantrieb ist, der zwischen den zwei Teilen (10A, 10B) des genannten mechanischen Gestänges (10) angebracht ist, um dem Gestänge eine variable Länge zu verleihen.

4. System entsprechend einem der Ansprüche 1 oder 2, **dadurch gekennzeichnet, dass** das genannte Betätigungsorgan ein Stellantrieb (13) ist, der zwischen der genannten Struktur (5) und dem genannten Gestänge (10) angebracht ist, um die Längsposition dieses Gestänges zu regeln.

5. System entsprechend einem beliebigen der Ansprüche 2 bis 4, **dadurch gekennzeichnet, dass** die Steuervorrichtung (16) anhand der vom genannten ersten Sensor (12) gelieferten Informationen einen Sollwert (dc) für die Position (d) des genannten Betätigungsorgans (13) erzeugt, wobei dieser Sollwert vom genannten Parameter (p) abhängt, und dadurch, dass der genannte Steuerbefehl für das Betätigungsorgan (13) das Signal des zwischen dem genannten Sollwert (dc) und den vom genannten zweiten Sensor (15) gelieferten Informationen auftretenden Fehlers ist.

6. System entsprechend Anspruch 5, **dadurch gekennzeichnet, dass** der genannte Sollwert (dc) für die Position des genannten Betätigungsorgans (13) von der Luftgeschwindigkeit des Flugzeugs abhängt.

7. System entsprechend Anspruch 6, **dadurch gekennzeichnet, dass** das genannte Betätigungsorgan (13) eine neutrale Position besitzt, für die die genannte Beziehung zwischen den Ausschlagwinkeln der Ausgleichsklappe und der aerodynamischen Fläche einen Grundwert aufweist, der einzig und allein durch die Geometrie des genannten mechanischen Gestänges (10) bestimmt wird, des weiteren dadurch, dass der an die Steuervorrichtung (16) gesendete Parameter (p) die Luftgeschwindigkeit des Flugzeugs ist, und dadurch, dass das genannte Betätigungsorgan (13) unter der Wirkung der genannten Steuervorrichtung (16) eine Operationsposition einnimmt, die von der genannten Luftgeschwindigkeit und vom Ausschlagwinkel der aerodynamischen Fläche abhängt und bei der die genannte Beziehung einen Operationswert annimmt, der sich vom genannten Grundwert unterscheidet.

8. System entsprechend Anspruch 7,
**dadurch gekennzeichnet, dass** der genannte Operationswert bei niedriger Luftgeschwindigkeit größer ist als der genannte Grundwert, und dadurch, dass der genannte Operationswert bei hoher Luftgeschwindigkeit kleiner ist als der genannte Grundwert.

9. System entsprechend Anspruch 7,
**dadurch gekennzeichnet, dass** der genannte Operationswert bei niedriger Luftgeschwindigkeit kleiner ist als der genannte Grundwert, und dadurch, dass der genannte Operationswert bei hoher Luftgeschwindigkeit größer ist als der genannte Grundwert.

10. System entsprechend einem beliebigen der Ansprüche 2 bis 4 für ein Flugzeug mit Vorrichtungen zur Auftriebserhöhung,
**dadurch gekennzeichnet, dass** der genannte Parameter (p), der an die Steuervorrichtung geschickt wird, eine repräsentative Information der Position der genannten Vorrichtungen zur Auftriebserhöhung ist, und dadurch, dass das genannte Betätigungsorgan (13) durch die Einwirkung der genannten Steuervorrichtung eine Operationsposition einnimmt, die von der Position der genannten Vorrichtungen zur Auftriebserhöhung abhängt.

11. System entsprechend Anspruch 10,
**dadurch gekennzeichnet, dass** der Wert der Beziehung zwischen den Ausschlagwinkeln der genannten Ausgleichsklappe (6) und der genannten aerodynamischen Fläche (3) in ausgefahrener Stellung der genannten Vorrichtungen zur Auftriebserhöhung größer ist als in eingefahrener Stellung.

12. System entsprechend Anspruch 10,
**dadurch gekennzeichnet, dass** der Wert der Beziehung zwischen den Ausschlagwinkeln der genannten Ausgleichsklappe (6) und der genannten aerodynamischen Fläche (3) in ausgefahrener Stellung der Vorrichtungen zur Auftriebserhöhung kleiner ist als in eingefahrener Stellung.

13. System entsprechend einem der Ansprüche 2 bis 4,
**dadurch gekennzeichnet, dass** die genannte Steuervorrichtung (27) anhand des genannten Parameters einen Sollwert (Bc) für die Position der genannten aerodynamischen Fläche (3) erzeugt und dadurch, dass der genannte Steuerbefehl für das Betätigungsorgan (13) die algebraische Summe aus den Informationen des genannten zweiten Sensors (15) und dem Signal des zwischen dem genannten Sollwert (Bc) und den vom genannten ersten Sensor (12) gelieferten Informationen auftretenden Fehlers ist.

14. System entsprechend Anspruch 13,
**dadurch gekennzeichnet, dass** der genannte Parameter aus den Kräften (E) gebildet wird, die der Pilot auf Steuerorgan (1) ausübt.

15. System entsprechend einem der Ansprüche 13 oder 14,
**dadurch gekennzeichnet, dass** der genannte Sollwert (Bc) eine Funktion der Luftgeschwindigkeit des Flugzeugs ist.

16. System entsprechend einem beliebigen der Ansprüche 13 bis 15,
**dadurch gekennzeichnet, dass** es einen Sensor (29) für die Kräfte (E) aufweist, die vom Piloten auf das genannte Steuerorgan (1) ausgeübt werden, dadurch, dass der genannte Parameter, der an die Steuervorrichtung geschickt wird, der Messwert der genannten Kräfte (E) ist, der vom genannten Sensor geliefert wird, und dadurch, dass das genannte Betätigungsorgan (13) durch die Einwirkung der genannten Steuervorrichtung (27) eine Operationsposition einnimmt, bei der der Ausschlag der genannten Ausgleichsklappe (6) gegenüber der genannten aerodynamischen Fläche (3) den Ausschlag dieser letztgenannten Fläche auf den Wert einstellt, der dem genannten Messwert der vom Piloten ausgeübten Kräfte entspricht.

17. System entsprechend Anspruch 16,
**dadurch gekennzeichnet, dass** die Einstellung des Ausschlags der genannten aerodynamischen Fläche (3) so aussieht, dass der Ausschlagwinkel dieser Fläche den vom Piloten ausgeübten gemessenen Kräften (E) proportional ist.

18. System entsprechend Anspruch 16,
**dadurch gekennzeichnet, dass** die Einstellung des Ausschlags der genannten aerodynamischen Fläche (3) so aussieht, dass das Verhältnis des Ausschlagwinkels der genannten aerodynamischen Fläche gegenüber den vom Piloten ausgeübten gemessenen Kräften eine Funktion der Luftgeschwindigkeit des genannten Flugzeugs ist.

19. System entsprechend Anspruch 18,
**dadurch gekennzeichnet, dass** die Einstellung des Ausschlags der genannten aerodynamischen Fläche so aussieht, dass das Verhältnis des Ausschlagwinkels der genannten aerodynamischen Fläche gegenüber den vom Piloten ausgeübten gemessenen Kräften mit wachsender Luftgeschwindigkeit des Flugzeugs kleiner wird.

20. System entsprechend Anspruch 16 für ein Flugzeug mit Vorrichtungen zur Auftriebserhöhung, **dadurch gekennzeichnet, dass** die Einstellung des Ausschlags der genannten aerodynamischen Fläche so aussieht, dass das Verhältnis zwischen dem Ausschlag der genannten aerodynamischen Fläche und den vom Piloten ausgeübten gemessenen Kräften von der Position der genannten Vorrichtungen zur Auftriebserhöhung abhängt.

21. System entsprechend Anspruch 20, **dadurch gekennzeichnet, dass** die Einstellung des Ausschlags der genannten aerodynamischen Fläche so aussieht, dass das Verhältnis zwischen dem Ausschlagwinkel der genannten aerodynamischen Fläche und den vom Piloten ausgeübten gemessenen Kräften in ausgefahrener Stellung der Vorrichtungen zur Auftriebserhöhung größer ist als in eingefahrener Stellung.

22. System entsprechend Anspruch 13, versehen mit einem Subtrahierglied (32), das zur Erzeugung des genannten Fehlersignals in einem Eingang die genannten, vom ersten Sensor (12) gelieferten Informationen und in seinem anderen Eingang den genannten Sollwert (Bc) für die Position der genannten aerodynamischen Fläche (3) empfängt, **dadurch gekennzeichnet, dass** es einen Schalter (39) umfasst, der mit dem genannten anderen Eingang in Verbindung steht, um an das genannte Subtrahierglied (32) entweder den genannten Sollwert (Bc) oder eine andere, für einen Ausschlagwinkel der genannten aerodynamischen Fläche repräsentative Information zu senden.

23. System entsprechend Anspruch 22 für ein mit einem Autopiloten ausgestattetes Flugzeug, **dadurch gekennzeichnet, dass** die genannte andere Information die vom genannten Autopiloten ausgehende Steuerung des Ausschlagwinkels der aerodynamischen Fläche (3) ist.

24. System entsprechend Anspruch 22, in dem die genannte aerodynamische Fläche ein Höhenruder ist, **dadurch gekennzeichnet, dass** die genannte andere Information ein Sturzflugsignal ist, wenn der Anstellwinkel des genannten Ruders eine Sicherheitsgrenze erreicht, die nicht überschritten werden darf, und dadurch, dass Schalter (39) automatisch gesteuert wird, um an das genannte Subtrahierglied (32) die genannte andere Information zu senden, wenn der genannte Sollwert (Bc) die genannte Sicherheitsgrenze überschreitet.

25. System für die Steuerung einer Ausgleichsklappe (6) eines Flugzeugs, in dem:

- die genannte Ausgleichsklappe (6) drehbar auf der Seite der Hinterkante einer aerodynamischen Fläche (3) angelenkt ist, wobei diese Fläche selbst drehbar auf der Struktur (5) des genannten Flugzeugs montiert ist;
- ein Steuerorgan (1) vorgesehen ist, über das der Pilot des genannten Flugzeugs verfügt, um den Ausschlag der genannten aerodynamischen Fläche (3) gegenüber der genannten Struktur (5) zu steuern, und
- ein mechanisches Gestänge (10) die genannte Ausgleichsklappe (6) mit der genannten Struktur (5) so verbindet, dass jedem Wert des Winkels des Ausschlags der genannten aerodynamischen Fläche gegenüber der genannten Struktur nach einer bestimmten Beziehung ein Wert des Winkels des Ausschlags der genannten Ausgleichsklappe gegenüber der genannten aerodynamischen Fläche entspricht,

**dadurch gekennzeichnet, dass**

- es keine mechanische Verbindung zwischen dem genannten Steuerorgan (1) und der genannten aerodynamischen Fläche (3) gibt; und
- dass es umfasst:

  . einen ersten Sensor (12), der den Wert des Ausschlagwinkels der genannten aerodynamischen Fläche (3) gegenüber der genannten Struktur (5) erfasst;
  . ein bewegliches und steuerbares Betätigungsorgan (13), das mit der genannten Struktur (5) in Verbindung steht und in der Lage ist, auf das genannte Gestänge (10) einzuwirken, um die genannte bestimmte Beziehung zwischen den Werten der Ausschlagwinkel der genannten aerodynamischen Fläche und der genannten Ausgleichsklappe zu verändern;
  . einen zweiten Sensor (15), der die Position des genannten Betätigungsorgans (13) erfasst;
  . einen dritten Sensor (29), der mit dem genannten Steuerorgan (1) in Verbindung steht, und
  . eine Steuervorrichtung (27), die die Informationen des genannten ersten, des genannten zweiten und des genannten dritten Sensors empfängt und die anhand dieser Informationen einen Steuerbefehl für das genannte Betätigungsorgan (13) erzeugt, der so aussieht, dass dieses Betätigungsorgan eine Operationsposition einnimmt, für die der Ausschlag der genannten Ausgleichsklappe (6) gegenüber der genannten aerodynamischen Fläche (3) die Einstellung der letztgenannten Fläche auf den Wert vornimmt, der dem vom genannten dritten Sensor (29) gelieferten Messwert entspricht.

**Claims**

1. A system for controlling an aircraft tab (6), said tab (6) being articulated so that it can rotate on the trailing edge side of an aerodynamic surface (3) itself mounted so that it can rotate on the structure (5) of said aircraft, the system comprising:

   - a command (1) available to the pilot of said aircraft, connected mechanically to said aerodynamic surface (3) in such a way as to control the turning thereof with respect to said structure (5); and
   - a mechanical linkage (10) connecting said tab (6) to said structure (5) in such a way that with each value of the angle through which said aerodynamic surface is turned with respect to said structure there corresponds, according to a determined relationship, a value of the angle through which said tab is turned with respect to said aerodynamic surface,

   **characterized in that** it includes:

   - a first sensor (12) detecting the value of the angle through which said aerodynamic surface (3) is turned with respect to said structure (5);
   - a moving and controllable actuating member (13) connected to said structure (5) and capable of acting on said linkage (10) to alter said determined relationship between the values of the angles through which said aerodynamic surface and said tab are turned;
   - a second sensor (15) detecting the position of said actuating member (13); and
   - a control device (16, 27) receiving information from said first and second sensors and, on the basis of this information, formulating a command for said actuating member (13).

2. The system as claimed in claim 1, **characterized in that** said control device (16, 27) additionally receives at least one parameter (p) originating from said aircraft and takes said parameter into account when formulating said command.

3. The system as claimed in either of claims 1 and 2, **characterized in that** said actuating member (13) is a jack inserted between two parts (10A, 10B) of said mechanical linkage (10) in order to give the latter a variable length.

4. The system as claimed in either of claims 1 and 2, **characterized in that** said actuating member is a jack (13) inserted between said structure (5) and said linkage (10) in order to adjust the longitudinal position thereof.

5. The system as claimed in any one of claims 2 to 4, **characterized in that**, on the basis of the information delivered by said first sensor (12), the control device (16) generates a datum value (dc) for the position (d) of said actuating member (13), this datum value depending on said parameter (p), and **in that** said command for the actuating member (13) is the error signal of the difference between said datum value (dc) and the information (d) delivered by said second sensor (15).

6. The system as claimed in claim 5, **characterized in that** said datum value (dc) for the position of said actuating member (13) depends on the airspeed of the aircraft.

7. The system as claimed in claim 6, **characterized in that** said actuating member (13) has a neutral position for which said relationship between said angles through which the tab and the aerodynamic surface are turned has a base value determined solely by the geometry of said mechanical linkage (10), **in that** said parameter (p) sent to the control device (16) is the airspeed of the aircraft, and **in that**, under the action of said control device (16), said actuating member (13) adopts an operational position which depends on said airspeed and on the angle through which the aerodynamic surface is turned and for which said relationship adopts an operational value which differs from said base value.

8. The system as claimed in claim 7, **characterized in that** at low airspeeds said operational value is higher than said base value and **in that** at high airspeeds said operational value is lower than said base value.

9. The system as claimed in claim 7, **characterized in that** at low airspeeds said operational value is lower than said base value and **in that** at high airspeeds said operational value is higher than said base value.

10. The system as claimed in any one of claims 2 to 4, for an aircraft including lift-augmenting devices, **characterized in that** said parameter (p) sent to the control device is an information item representing the position of said lift-augmenting devices and **in that** under the action of said control device said actuating member (13) adopts an operational position which depends on the position of said lift-augmenting devices.

11. The system as claimed in claim 10, **characterized in that** the value of the relationship between the angles through which said tab (6) and said aerodynamic surface (3) are turned is greater when said lift-augmenting devices are deployed than when they are retracted.

12. The system as claimed in claim 10, **characterized in that** the value of the relationship between the angles through which said tab (6) and said aerodynamic surface (3) are turned is smaller when said lift-augmenting devices are deployed than when they are retracted.

13. The system as claimed in any one of claims 2 to 4, **characterized in that** on the basis of said parameter, said control device (27) generates a datum value (Bc) for the position of said aerodynamic surface (3) and **in that** said command for the actuating member (13) is the algebraic sum of the information from said second sensor (15) and of the error signal of the difference between said datum value (Bc) and the information delivered by said first sensor (12).

14. The system as claimed in claim 13, **characterized in that** said parameter consists of the forces (E) applied by the pilot to the control (1).

15. The system as claimed in either of claims 13 and 14, **characterized in that** said datum value (Bc) is a function of the airspeed of the aircraft.

16. The system as claimed in any one of claims 13 to 15, **characterized in that** it includes a sensor (29) for the forces (E) exerted by the pilot on said control (1), **in that** said parameter sent to the control device is the measurement of said forces (E) as delivered by said sensor and **in that** under the action of said control device (27), said actuating member (13) adopts an operational position for which the turning of said tab (6) with respect to said aerodynamic surface (3) adjusts the turning of the latter to the value which corresponds to said measurement of the forces exerted by the pilot.

17. The system as claimed in claim 16, **characterized in that** the adjustment of the turning of said aerodynamic surface (3) is such that the angle through which the latter is turned is proportional to the pilot-exerted forces (E) measured.

18. The system as claimed in claim 16, **characterized in that** the adjustment of the turning of said aerodynamic surface (3) is such that the ratio of the angle through which said aerodynamic surface is turned to the pilot-exerted forces measured is a function of the airspeed of said aircraft.

19. The system as claimed in claim 18, **characterized in that** the adjustment of the turning of said aerodynamic surface is such that the ratio of the angle through which said aerodynamic surface is turned to the pilot-exerted forces measured decreases when the airspeed increases.

20. The system as claimed in claim 16, for an aircraft which has lift-augmenting devices, **characterized in that** the adjustment of the turning of said aerodynamic surface is such that the ratio of the turning of said aerodynamic surface to the pilot-exerted forces measured depends on the position of said lift-augmenting devices.

21. The system as claimed in claim 20, **characterized in that** the adjustment of the turning of said aerodynamic surface is such that the ratio of the angle through which said aerodynamic surface is turned to the pilot-exerted forces measured is greater when the lift-augmenting devices are deployed than when they are retracted.

22. The system as claimed in claim 13, including a subtracter (32) which, in order to generate said error signal receives, on one input, said information delivered by said first sensor (12), and on its other input, said datum value (Bc) for the position of said aerodynamic surface (3), **characterized in that** includes a switch (39) connected to said other input so that it can send to said subtracter (32) either said datum value (Bc) or some other information item representing an angle through which said aerodynamic surface is turned.

23. The system as claimed in claim 22, for an aircraft which has an automatic pilot, **characterized in that** said other information item is the command from said automatic pilot to turn the aerodynamic surface (3) through some angle.

24. The system as claimed in claim 22, in which said aerodynamic surface is an elevator, **characterized in that** said other information item corresponds to a nosedown signal when the angle of incidence of said elevator reaches a safety limit which must not be exceeded and **in that** said comparator (39) is commanded automatically to make it send said other information item to said subtracter (32) when said datum value (Bc) exceeds said safety limit.

25. A system for controlling an aircraft tab (6), in which system:

- said tab (6) is articulated so that it can rotate on the trailing edge side of an aerodynamic surface (3) itself mounted so that it can rotate on the structure (5) of said aircraft;
- a control (1) available to the pilot of said aircraft in order to control the turning of said aerodynamic surface (3) with respect to said structure (5); and
- a mechanical linkage (10) connects said tab (6) to said structure (5) in such a way that with each value of the angle through which said aerodynamic surface is turned with respect to said structure there corresponds, according to a determined relationship, a value of the angle through which said tab is turned with respect to said aerodynamic surface,

characterized:

- in that there is no mechanical link between said command (1) and said aerodynamic surface (3); and
- in that it includes:

  · a first sensor (12) detecting the value of the angle through which said aerodynamic surface (3) is turned with respect to said structure (5);
  · a movable and controllable actuating member (13) connected to said structure (5) and capable of acting on said linkage (10) to alter said determined relationship between the values of the angles through which said aerodynamic surface and said tab are turned;
  · a second sensor (15) detecting the position of said actuating member (13);
  · a third sensor (29) connected to said command (1); and
  · a control device (27) receiving the information from said first, second and third sensors and, on the basis of this information, formulating a command for said actuating member (13) so that the latter adopts an operational position for which the turning of said tab (6) with respect to said aerodynamic surface (3) adjusts the turning of the latter to the value which corresponds to said measurement delivered by said third sensor (29).

FIG.1

EP 0 807 573 B1

EP 0 807 573 B1

FIG. 2

13

dc-d

20

$dc=F(B,p)$

+ −

22

d

15

18

23

12

B

17

21

16

19 p

## FIG.3

b

K=K1+K2.K32 (Vc>Vo)

26

K=K1 (Vc=Vo)

24

K=K1+K2.K31 (Vc<Vo)

25

B

## FIG.4

FIG.5

13

20

27

18

15

33

31

34

12  B

17  −  ⊗  +  Bc

32

28  30  29

## FIG.6

Bc

Vc<VFE2

37  (K43)

Vc<VFE1

36  (K42)

Vc>VFE1

35  (K41)

Bcmax

35'

Em  E

## FIG.7

EP 0 807 573 B1

FIG.8

EP 0 807 573 B1

FIG.9

22